# EUROPEAN PATENT SPECIFICATION

(11) **EP 0 779 454 B1**
(45) Date of publication and mention of the grant of the patent: **17.04.2002**
(21) Application number: 96119292.9
(22) Date of filing: 02.12.1996
(51) Int. Cl.: F16H 37/08, F16H 61/00

(54) **Continuously variable transmission**
Stufenlos regelbares Getriebe
Variateur continu de vitesse

(30) Priority: 15.12.1995 JP 32766495; 15.12.1995 JP 32766395
(43) Date of publication of application: 18.06.1997
(73) Proprietor: AISIN AW CO., LTD., Anjo-shi Aichi-ken 444-11 (JP)
(72) Inventor: Tsukamoto, Kazumasa, Aisin AW Co., Ltd., Anjo-shi, Aichi-ken, 444-11 (JP); Inuzuka, Takeshi, Aisin AW Co., Ltd., Anjo-shi, Aichi-ken, 444-11 (JP); Hattori, Masashi, Aisin AW Co., Ltd., Anjo-shi, Aichi-ken, 444-11 (JP)
(74) Representative: VOSSIUS & PARTNER

(56) References cited:
- EP-A- 0 733 830
- US-A- 3 375 734
- US-A- 3 385 132
- US-A- 3 552 232
- US-A- 5 092 434

## Description

In general, the invention relates to a continuously variable transmission using a belt-type continuously variable transmission apparatus which has primary and secondary pulleys comprising two sheaves respectively and a belt wound around the primary and secondary pulleys, more specifically to a mode control of a continuously variable transmission which is suitable for vehicle use and realized by combining a belt-type continuously variable transmission apparatus with a planetary gear to provide both low and high modes for a variety of pulley ratios in a predetermined pulley-ratio range.

In recent years, a continuously variable transmission of a vehicle realized by combining a belt-type continuously variable transmission apparatus with a planetary gear to further increase fuel efficiency and driving performance of the vehicle has been proposed. Such a continuously variable transmission is disclosed for instance in U.S. Patent No. 4,644,820.

A belt-type continuously variable transmission apparatus employed in a continuously variable transmission has primary and secondary pulleys respectively comprising two sheaves, that is, a fixed sheave and a movable sheave and a belt wound around the primary and secondary pulleys. By changing a narrowing pressure of the belt determined by the movable sheave, a pulley ratio can be changed. More specifically, the pulley ratio is decreased when the narrowing pressure on the primary side is raised. On the other hand, the pulley ratio is increased when the narrowing pressure on the secondary side is raised. The rotations of a sun gear and a carrier of the planetary gear can be adjusted properly in accordance with the value of the pulley ratio. In this way, the rotation of a ring gear and an output shaft as an integral body can be set in the normal direction, stopped or set in the reverse direction in order to establish a forward drive state, a neutral state or a backward drive state respectively.

The belt-type continuously variable transmission apparatus further incorporates two clutches. By changing the clutch engagement state from one to another, a low mode with a high torque ratio and a high mode with a low torque ratio can be set within a limited pulley-ratio range as is already known.

According to the continuously variable transmission, the pulley ratio can be changed from a high value to a low one. Typically, the low mode is for a forward drive state at a low speed, the neutral state and the backward drive state. At the same pulley ratios, the high mode is for a forward drive state at a gradually increasing speed in a high speed range. That is to say, for a variety of pulley ratios, two modes, that is, the low and high modes are available. For this reason, if the clutch engagement state is changed from one to another when the pulley ratio is not within a predetermined pulley-ratio range, jump shift is resulted in. In this case, the vehicle state is switched from a forward drive at a high speed to a backward drive, which gives rise to a problem of an unexpected backward drive. Also, the vehicle state may change from a forward drive at a high speed to a forward drive at a low speed, which causes over revolution of an engine.

In US-A-3 552 232 as the closest prior art an infinitely-variable, multi-range transmission is disclosed, wherein the transmission includes a variable-speed shaft comprising a variable-diameter drive and driven sheave coaxially affixed to a shaft, respectively. An endless belt is drivingly trained around the sheaves, whereby the diameter of the sheaves is respectively established by hydraulically-actuated control cylinders and coaxially affixed to movable sheave faces of the drive and driven sheaves. A feeler arm rides in a groove of the drive sheave control cylinder to indicate the position of said cylinder. Further the transmission comprises hydraulically actuated high, low and reverse clutches which are controlled by valves. The range and velocity of the transmission is shifted by transverse motion of a control lever.

It is thus an object of the invention to provide a continuously variable transmission which is capable of avoiding jump shift within a predetermined pulley-ratio range and eliminating an unexpected backward drive and over revolution of an engine.

To solve the problems described above, according to the invention as defined in independent claim 1, there is provided a continuously variable transmission comprising: an input shaft associated with an engine output shaft; an output shaft associated with vehicle wheels; a belt-type continuously variable transmission apparatus comprising a first pulley associated with the input shaft, a second pulley provided on the side of the output shaft and a belt wound around the first and second pulleys; and a planetary gear interposed between the input and output shafts. A transmission path between the input and output shafts is changed so that any pulley ratio in a pulley-ratio range of the belt-type continuously variable transmission apparatus can correspond to a low mode with a high torque ratio and a high mode with a low torque ratio. The continuously variable transmission further comprises: low-high switching means for switching operation between the low and high modes; detecting means for detecting the pulley ratio of the belt-type continuously variable transmission apparatus; and inhibition means for inhibiting switching operation between the low and high modes by preventing the low-high switching means from operating if a pulley ratio detected by the detecting means is within a predetermined pulley-ratio range.

In addition, according to the invention, the continuously variable transmission further comprises a first clutch which has a first hydraulic servo and is engaged to set the low mode when a hydraulic pressure is applied to the first hydraulic servo, and a second clutch which has a second hydraulic servo and is engaged to set the high mode when a hydraulic pressure is applied to the second hydraulic servo. The low-high switching means has a low-high switching valve for switching operation to selectively supply the hydraulic pressure to either of the first and second hydraulic servos.

According to the invention, the low-high switching valve has a spool for switching a supply path of the hydraulic pressure to selectively supply the hydraulic pressure to either of the first and second hydraulic servos in accordance with an output signal from the detecting means, and the inhibition means has a lock member for locking the spool if the pulley ratio is within a predetermined pulley-ratio range.

According to the invention, the first and second pulleys are respectively provided with movable sheaves for changing a narrowing pressure of the belt to change the pulley ratio. The detecting means has a position detecting member which has a protrusion/dent portion formed thereon for engaging and disengaging one end of the lock member and is movable in an associated manner with either of the movable sheaves. And the other end of the lock member locks and unlocks the spool by engaging and disengaging the one end of the lock member with and from the protrusion/dent portion respectively.

According to the invention, the planetary gear comprises a first rotary element connected to the input shaft, a second rotary element connected to the second pulley and a third rotary element connected to the output shaft, and the input shaft and the first rotary element are connected to each other by the first clutch, and two of the first, second and third rotary elements are connected to each other by the second clutch.

In the configuration described above, when the detecting means detects a pulley ratio within a predetermined pulley-ratio range, the inhibition means prevents the low-high switching means from switching operation between a low mode and a high mode. As a result, when the pulley ratio enters the predetermined pulley-ratio range in the low mode, the low mode is sustained and operation cannot be switched to the high mode. When the pulley ratio enters the predetermined pulley-ratio range in the high mode, on the other hand, the high mode is sustained and operation cannot be switched to the low mode. In either case, when the pulley ratio enters the predetermined pulley-ratio range in a certain mode, that mode is sustained and operation cannot be switched to another mode.

It should be noted that it is desirable to set the predetermined pulley-ratio range described above within a range in which the rotational speed greatly increases when operation is switched from the high mode to the low mode. It is desirable as well to set the predetermined pulley-ratio range within a range in which the vehicle state is inverted from a forward drive to a backward drive when operation is switched from the high mode to the low mode as well as within a range in which the output shaft rotates at a high speed with the high mode taken as a reference and an operation is carried out to switch from the high mode to the low mode.

The foregoing and further objects, features and advantages of the invention will become apparent from the following description of preferred embodiments with reference to the accompanying drawings, wherein:
Fig. 1 is a skeleton diagram showing a power transmitting apparatus of a continuously variable transmission provided by an embodiment of the invention;
Fig. 2 is a speed diagram of the power transmitting apparatus as shown in Fig. 1;
Fig. 3 is a diagram showing a relation between the output torque and the pulley ratio of a belt-type continuously variable transmission apparatus employed in the power transmitting apparatus as shown in Fig. 1;
Fig. 4 is a diagram showing a relation between the output rotational speed and the pulley ratio of the belt-type continuously variable transmission apparatus employed in the power transmitting apparatus shown in Fig. 1;
Fig. 5 is a table showing engagement of a low clutch and a high clutch in a variety of ranges;
Fig. 6 is a diagram showing cross sections of double-chamber-type hydraulic servos which apply axial forces to a primary pulley to a secondary pulley respectively;
Fig. 7 is a diagram showing a hydraulic circuit of a hydraulic control mechanism;
Fig. 8 is a diagram showing the structure of a low-high control valve and an interlock rod; and
Fig. 9 is a diagram showing a narrowing pressure of a belt generated by the a movable sheave.

The invention will become apparent from the following detailed description of some preferred embodiments with reference to accompanying diagrams showing the embodiments.

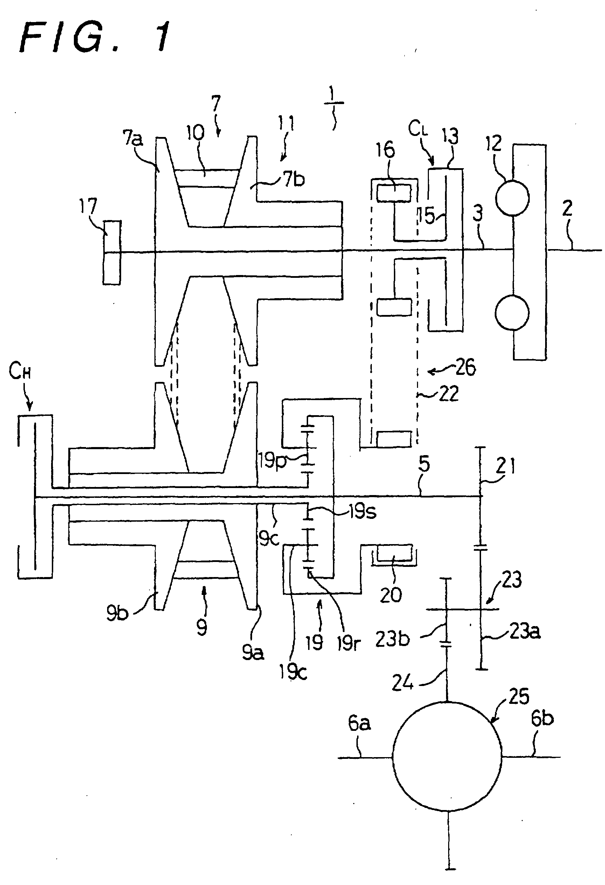

First of all, a power transmitting mechanism of the continuously variable transmission provided by the invention is explained by referring to Fig. 1. As shown in the figure, an automatic continuously variable transmission 1, which is referred to hereafter simply as a continuously variable transmission, comprises a first shaft 3 linked to an engine crank shaft 2, a second shaft 5 and third right and left acceleration shafts 6a and 6b linked to the vehicle front wheels. The first shaft 3 supports a primary (first) pulley 7 while the second shaft 5 supports a secondary (second) pulley 9. A belt 10 is wound around these primary and secondary pulleys 7 and 9 to constitute a belt-type continuously variable transmission apparatus 11.

Furthermore, the first shaft 3 is linked to the engine crank shaft 2 by way of a damper 12. An input-side member 13 of a low clutch C_{L} is fixed on the first shaft 3 while an output-side member 15 thereof is rotatably supported by the first shaft 3. A primary-side sprocket 16 forming a power transmitting means is linked integrally to the output-side member 15. In addition, a fixed sheave 7a of the primary pulley 7 is fixed to the first shaft 3 and an oil pump 17 is attached to the end of the first shaft 3. A movable sheave 7b of the primary pulley 7 is supported by the fixed sheave 7a movably in the shaft direction.

The secondary pulley 9 is rotatably supported by the second shaft 5. The secondary pulley 9 comprises a fixed sheave 9a, a movable sheave 9b supported by the fixed sheave 9a movably in the shaft direction and a secondary shaft 9c integrally linked to the fixed sheave 9a. In addition, a high clutch C_{H} is provided between the second shaft 5 and the secondary shaft 9c. A planetary gear 19 is provided on the second shaft 5 and a secondary-side sprocket 20 is rotatably supported by the planetary gear 19. An output gear 21 is fixed on one end of the second shaft 5 to form an output shaft.

The planetary gear 19 comprises a sun gear 19s, a ring gear 19r, a pinion 19p engaged with both the sun and ring gears 19s and 19r and a single pinion planetary gear having a carrier 19c for rotatably supporting the pinion 19p. The sun gear 19s is linked to the secondary shaft 9c, serving as a second rotary element while the ring gear 19r is linked to the second shaft 5, serving as a third rotary element. On the other hand, the first rotary element 19c is linked to the secondary-side sprocket 20, serving as a first rotary element. A wound component 22 such as a silent chain, a roller chain or a timing belt is wound around the primary-side and secondary-side sprockets 16 and 20.

In addition, the gear 21 fixed on the second shaft 5 is engaged with a large gear 23a of a speed reducing gear unit 23 and a small gear 23b of the speed reducing gear unit 23 is engaged with a ring gear 24 of a differential apparatus 25. The differential apparatus 25 produces a differential rotation to each of the left and right acceleration shafts 6a and 6b constituting the third shaft 6.

Next, operations based on the power transmitting mechanism of the continuously variable transmission are explained by referring to Figs. 1, 2, 3, 4 and 5. The rotation of the engine crank shaft 2 is transmitted to the first shaft 3 by way of the damper 12. In the low mode in which the low clutch C_{L} is engaged while the high clutch C_{H} is disengaged, the rotation of the first shaft 3 is transmitted to the primary pulley 7 and also transmitted to the first rotary element 19c of the planetary gear 19 by way of a power transmitting apparatus 26 comprising the primary-side sprocket 16, the wound component 22 and the secondary-side sprocket 20. On the other hand, while the rotational speed of the primary pulley 7 is being continuously shifted by properly adjusting the pulley ratio of the primary pulley 7 to the secondary pulley 9 by means of an axial force applying means such as a hydraulic servo to be described later, the variable speed rotation of the primary pulley 7 is transmitted to the secondary pulley 9. The variable speed rotation of the secondary pulley 9 is further transmitted to the sun gear 19s of the planetary gear 19.

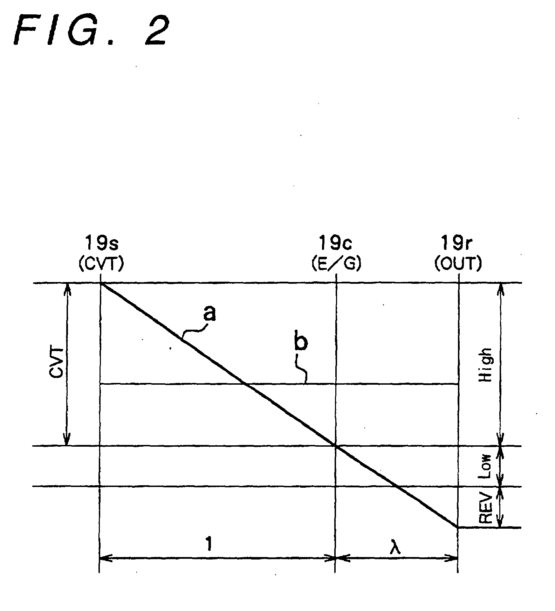

In the planetary gear 19, as shown in a speed diagram of Fig. 2, the carrier 19c to which a constant speed rotation is transmitted by way of the power transmitting apparatus 26 becomes a reactive element, transmitting the continuously variable speed rotation from the belt-type continuous variable transmission apparatus (CVT) 11 to the sun gear 19s. The rotations of the carrier 19c and the sun gear 19s are combined before being transmitted to the second shaft 5 by way of the ring gear 19r. Since the ring gear 19r, a rotary element other than the reactive support element, is linked to the second shaft 5, the planetary gear 19 creates a torque environment and, at the same time, the sun gear 19s and the carrier 19c rotate in the same direction. As a result, the second shaft 5 rotates in the forward (Low) and reverse (Rev) directions, crossing the zero rotational speed. That is to say, in the torque environment, in the state of a normal direction (forward direction) rotation of the second shaft 5, the belt-type continuously variable transmission apparatus 11 transmits a torque from the secondary pulley 9 to the primary pulley 7 but, in the state of a reverse direction (backward direction) rotation of the second shaft 5, a torque is transmitted from the primary pulley 7 to the secondary pulley 9.

In the high mode in which the low clutch C_{L} is disengaged while the high clutch C_{H} is engaged, the transmission of power to the planetary gear 19 by way of the power transmitting apparatus 26 is cut off. In this mode, the engagement of the high clutch C_{H} puts the planetary gear 19 in an integrally rotating state. As a result, the rotation of the first shaft 3 is transmitted to the second shaft 5 by way of the belt-type continuously variable transmission apparatus 11 and the high clutch C_{H}. That is to say, the belt-type continuously variable transmission apparatus 11 transmits power from the primary pulley 7 to the secondary pulley 9. By the same token, the rotation of the second shaft 5 is transmitted to the differential apparatus 25 by way of the output gear 21 and the speed reducing gear unit 23 as well as to the right and left front wheels by way of the right and left acceleration shafts 6a and 6b respectively.

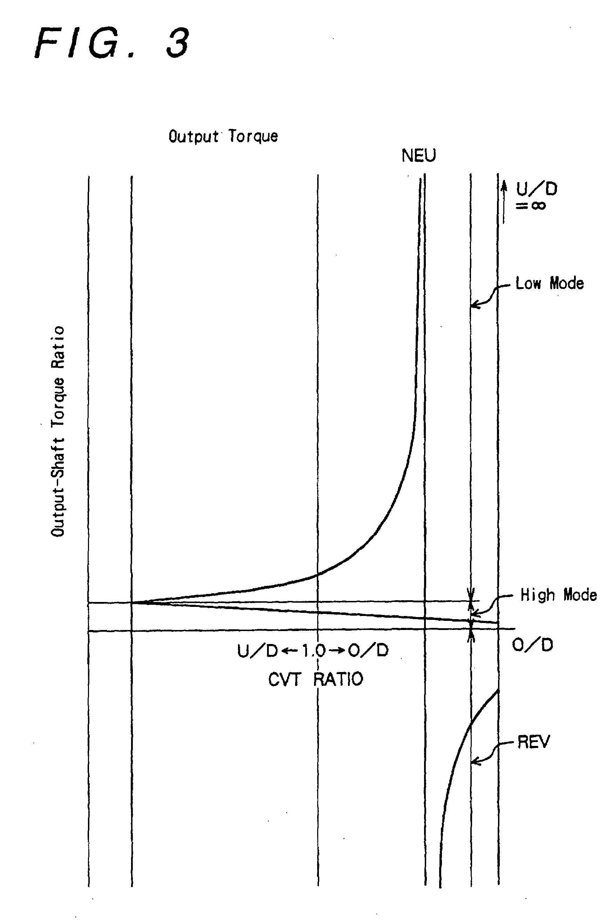

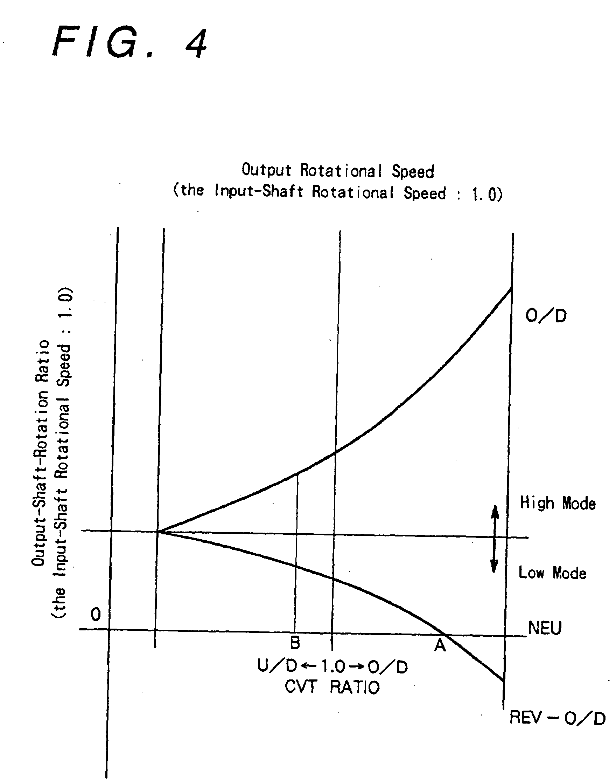

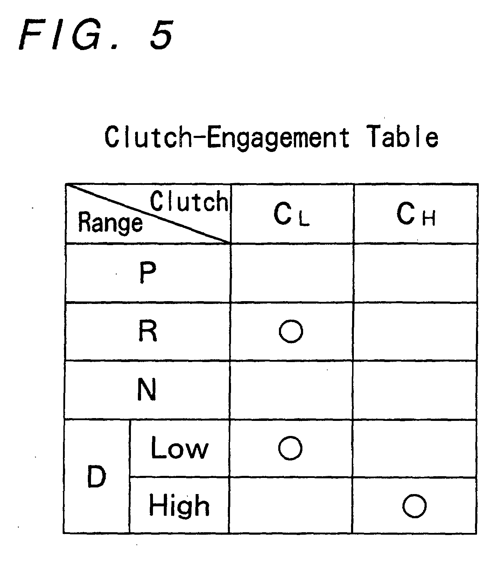

As shown in the speed diagram of Fig. 2, an output torque diagram of Fig. 3, a diagram of the output rotational speed of Fig. 4, and a clutch engagement table of Fig. 5, in the low mode, that is, when the CVT 11 is at the limit (the O/D end) of the O/D (overdrive) direction (the position of a line (a) shown in Fig. 2), based on the fact that the sun gear 19s is rotating at a maximum speed, the rotation of the ring gear 19r is reversed into a reverse (REV) rotation relative to the rotation of the carrier 19c which is rotating at a constant speed and the reverse (REV) rotation is transmitted to the second shaft 5. As the CVT 11 makes a shift in the U/D (underdrive) direction, the rotational speed in the reverse direction decreases, arriving at a neutral position (an NEU position) at which the rotational speed of the second shaft 5 is reduced to a zero at a predetermined pulley ratio determined by the gear ratios of the planetary gear 19 and the power transmitting apparatus 26. In addition, as the CVT 11 makes a shift to the U/D (underdrive) direction, the rotation of the ring gear 19r is switched to the normal direction, and the rotation in the normal direction, that is, in the forward drive direction is transmitted to the second shaft 5. At that time, the torque produced by the second shaft 5 increases to an infinite value in a region in close proximity to the neutral (NEU) position as is obvious from Fig. 3.

When the CVT 11 is at the limit (the U/D end) of the U/D direction, the high clutch C_{H} is engaged and an operation to switch to the high mode is carried out. In addition, as shown in Figs. 3 and 4, at a pulley ratio at which an operation to switch from the low mode to the high mode is carried out, the output torque and the output rotational speed are continuous. In the high mode, the output rotation of the CVT 11 is transmitted to the second shaft 5 as it is. As a result, the speed line is parallel to the horizontal axis as shown by a line (b) in the speed diagram of Fig. 2. As the CVT 11 makes a shift in the O/D direction, the rotation of the second shaft 5 also varies in the O/D direction, reducing the transmitted torque by an amount corresponding to the increase in rotational speed. It should be noted that, λ shown in Fig. 2 is a ratio of the sun gear tooth count Zs to the ring gear tooth count Zr (that is, Zs/Zr).

Next, a hydraulic control mechanism of the continuously variable transmission provided by an embodiment of the invention is explained.

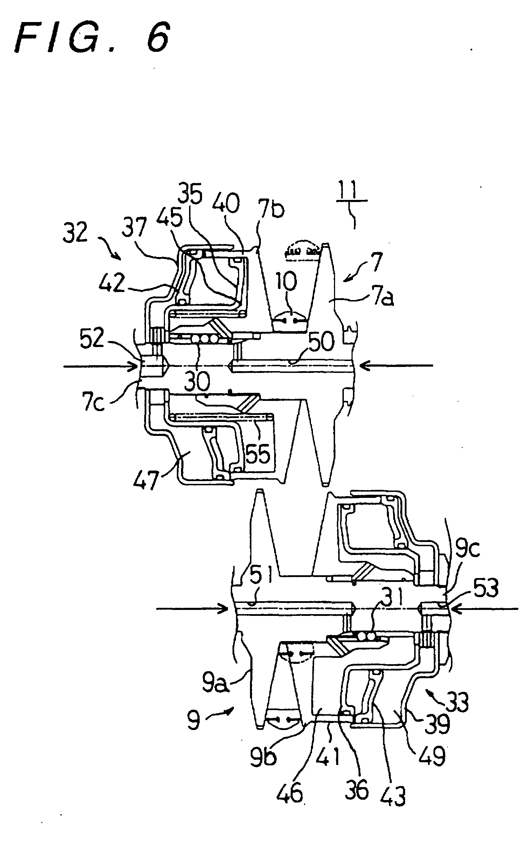

As shown in Fig. 6, the movable sheave 7b of the primary pulley 7 is supported movably in the shaft direction by a boss 7c of the fixed sheave 7a of the primary pulley 7 by way of a ball spline 30. By the same token, the movable sheave 9b of the secondary pulley 9 is supported movably in the shaft direction by a boss 9c of the fixed sheave 9a of the secondary pulley 9 by way of a ball spline 31. On the back surface of the movable sheave 7b, a primary-side hydraulic servo 32 serving as an axial force applying means for applying an axial force to the primary pulley 7 is provided. Similarly, on the back surface of the movable sheave 9b, a secondary-side hydraulic servo 33 serving as an axial force applying means for applying an axial force to the secondary pulley 9 is provided. The primary-side hydraulic servo 32 comprises a partition member 35 fixed to the fixed sheave 7c, a cylinder member 37, a drum member 40 fixed to the back surface of the movable sheave 7b and a second piston member 42. Likewise, the secondary-side hydraulic servo 33 comprises a partition member 36 fixed to the fixed sheave 9c, a cylinder member 39, a drum member 41 fixed to the back surface of the movable sheave 9b and a second piston member 43. The partition member 35 is fitted to the drum member 40 in a hydraulic-sealed state and also fitted to the second piston member 42, the cylinder member 37 and the partition member 35 to form a double piston structure comprising a first hydraulic chamber 45 and a second hydraulic chamber 47. By the same token, the partition member 36 is fitted to the drum member 41 in a hydraulically sealed state and also fitted to the second piston member 43, the cylinder member 39 and the partition member 36 to form a double piston structure comprising a first hydraulic chamber 46 and a second hydraulic chamber 49.

In addition, in the first hydraulic chamber 45 of the primary-side hydraulic servo 32, the back surface of the movable sheave 7b forms a piston surface on the primary side. Similarly, in the first hydraulic chamber 46 of the secondary-side hydraulic servo 33, the back surface of the movable sheave 9b forms a piston surface on the secondary side. An effective pressure receiving area on the piston surface on the primary side is equal to an effective pressure receiving area on the secondary side. In addition, hydraulic paths 50 and 52 connected to the first and second hydraulic chambers 45 and 47 are formed on the boss 7c of the fixed sheave 7b on the primary side. By the same token, hydraulic paths 51 and 53 connected to the first and second hydraulic chambers 46 and 49 are formed on the boss 9c of the fixed sheave 9a on the secondary side. In addition, a spring 55 for preloading use is provided in the first hydraulic chamber 45 of the primary-side hydraulic servo 32.

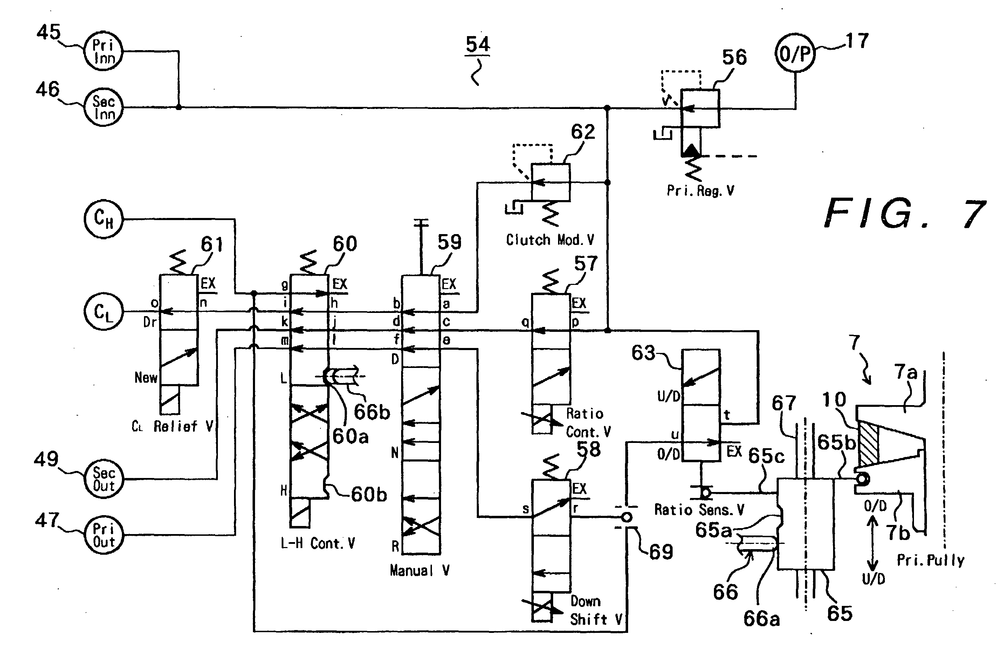

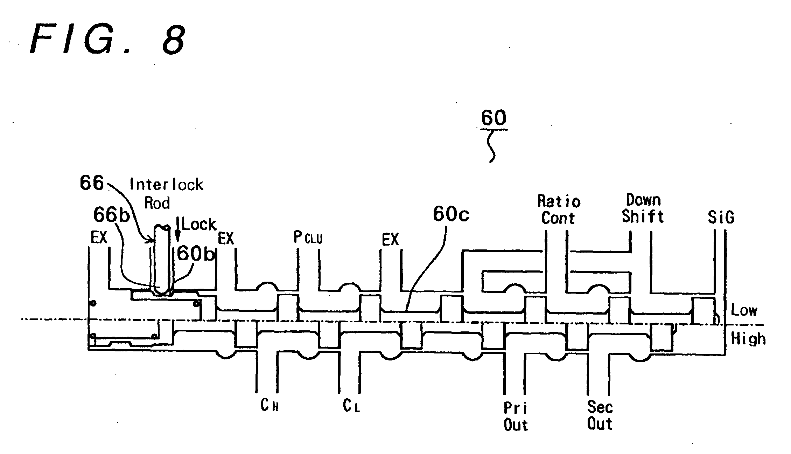

In addition, as shown in Fig. 7, a hydraulic control mechanism (means) 54 employed in the present embodiment comprises a primary regulator valve 56, a ratio control valve 57, a down-shift relief valve 58, a manual valve 59, a low-high control valve (or a low-high switching valve) 60 serving as a low-high switching means, a low clutch relief valve 61 and a clutch modulation valve 62. For details of the low-high control valve 60, refer to Fig. 8. Furthermore, the hydraulic control mechanism 54 also includes a ratio sensing valve 63, a sensor shoe 65 used as a detecting means (a position detecting means) and an interlock rod 66 serving as inhibition means (lock member).

The low-high control valve 60 has a spool 60c which is used for switching a hydraulic pressure supplying path in accordance with on and off operations of a solenoid valve, not shown in the figure, when an on/off signal based on a pulley ratio found from the rotational speeds of the pulleys 7 and 9 is supplied to the solenoid valve. The spool 60c has dents 60a and 60b and protrusions at locations other than those of the dents 60a and 60b.

The sensor shoe 65 is supported slidably by a guide member 67 installed in parallel to the axis of the primary pulley 7. Two linkage portions 65b and 65c protrude from the sensor 65. The linkage portion 65b is engaged with the movable sheave 7b of the primary pulley 7 while the linkage portion 65c is engaged with the ratio sensing valve 63 cited above. With this arrangement, therefore, when the movable sheave 7b moves along the shaft in the O/D or U/D direction, the distance by which the movable sheave 7b moves is transmitted to the ratio sensing valve 63 as it is by way of the sensor shoe 65.

Furthermore, a dent 65a is formed on the sensor shoe 65 in addition to a protrusion formed at a location other than that of the dent 65a. A base end 66a, one end of the interlock rod 66, is engaged with and disengaged from the dent 65a. The interlock rod 66 is installed so as to pass through a valve body. The other end 66b of the interlock rod 66 is engaged with and disengaged from the dents 60a and 60b of the low-high control valve 60. Fig. 7 shows the interlock rod 66 which is split into the base end 66a and the other end 66b. It should be noted, however, that in actuality, the interlock rod 66 is a single rod. In addition, when the base end 66a of the interlock rod 66 is engaged with the dent 65a of the sensor shoe 65, the other end 66b is engaged with neither the dent 60a nor the dent 60b of the low-high control valve 60. Instead, the other end 66b is brought into contact with a protrusion on the surface of the low-high control valve 60. When the base end 66a of the interlock rod 66 is disengaged from the dent 65a of the sensor shoe 65 and brought into contact with the protrusion on the surface of the sensor shoe 65, on the contrary, the other end 66b is engaged with either the dent 60a or the dent 60b of the low-high control valve 60.

Next, the operation of the hydraulic control mechanism 54 with the structure described above is explained by referring to Fig. 7.

Operations in the following modes and ranges will be explained in the order they are listed as follows:
(1) D range L mode (Low mode of drive range)
(2) D range H mode (High mode of drive range)
(3) R range (Reverse range)
(4) N and P ranges (Neutral and parking ranges)

A first pulley ratio A shown in Fig. 4 is a pulley ratio in a neutral state and a second pulley ratio B is greater than the first pulley ratio A. A vertical line passing through the second pulley ratio B is the border between a region with high pulley ratios on the left side of the figure and a region with low pulley ratios on the right side of the figure. The low and high modes of the drive (D) ranges (1) and (2) are set by changing control in the regions on the left and right sides of the second pulley ratio B. By changing the control in this way, as will be described later, a down shift is inhibited in the low mode of the drive range and in the reverse (R) range in the region below the second pulley ratio B. Also in the region below the second pulley ratio B, a jump from the high mode of the drive D range to the low mode of the drive range and to the reverse range is inhibited.

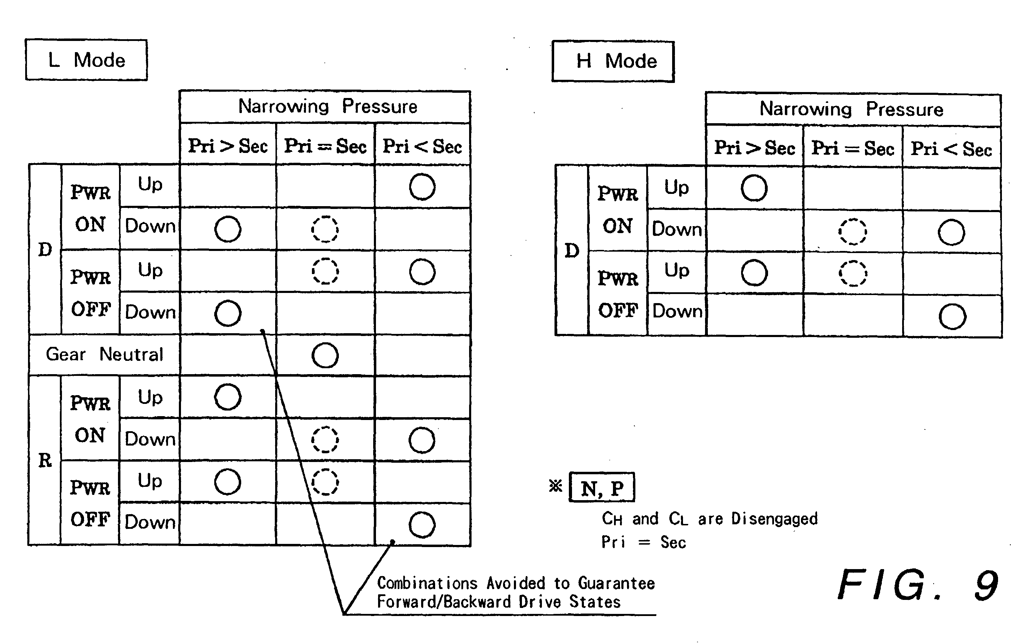

First of all, in any one of the modes and the ranges (1) to (4) described above, a hydraulic pressure from the oil pump 17 is appropriately regulated by the primary regulator valve 56 and output from an output port (v) thereof as shown in Fig. 7. At the same time, the regulated hydraulic pressure is also supplied to the first hydraulic chambers 45 and 46 of the hydraulic servos 32 and 33 respectively. Control is carried out so as to produce hydraulic pressures in both the first hydraulic chambers 45 and 46 equal to each other. The regulated hydraulic pressure is also supplied to the clutch modulation valve 62. Then, a hydraulic pressure output by the clutch modulation valve 62 is selectively supplied to the low clutch C_{L} or the high clutch C_{H} except during the N and P ranges (4). Operations in the modes and ranges (1) to (4) are described one mode/range after another by referring to Figs. 4 and 7 as well as a narrowing force balance table shown in Fig. 9.

### (1) L mode in drive (D) range

Equal hydraulic pressures are supplied to the first hydraulic chambers 45 and 46 respectively. The low clutch C_{L} is engaged and, in an up shift, a hydraulic pressure is further supplied to the second hydraulic chamber 49. In addition, in a down shift, a hydraulic pressure is supplied to the second hydraulic chamber 47 but, in the region below the second pulley ratio B, the supply of the hydraulic pressure is halted, inhibiting the down shift.

That is to say, in the up shift, the manual valve 59 is operated at a D range position, opening hydraulic paths between a port (a) and a port (b), a port (c) and a port (d) as well as a port (e) and a port (f) thereof. In addition, the low-high control valve 60 is set at an L mode position, opening hydraulic paths between a port (h) and a port (i), a port (j) and a port (k) as well as a port (l) and a port (m) thereof. At the same, a switching operation is carried out to open a hydraulic path between a port (g) and a drain port Ex of the low-high control valve 60 and sustain the hydraulic path in this state.

As a result, the hydraulic pressure from the clutch modulation valve 62 is supplied to the low clutch C_{L} by way of the ports (a) and (b) of the manual valve 59, the ports (h) and (i) of the low-high control valve 60 and ports (n) and (o) of the low clutch relief valve 61, putting the low clutch C_{L} in an engaged state. In addition, the hydraulic pressure from the output port (v) of the primary regulator valve 56 is gradually increased by the ratio control valve 57 to a value corresponding to a target pulley ratio. The gradually increasing hydraulic pressure is then supplied to the second hydraulic chamber 49 through ports (p) and (q) of the ratio control valve 57, the ports (c) and (d) of the manual valve 59 and the ports (j) and (k) of the low-high control valve 60. It should be noted that, in this state, a hydraulic path between the port (g) of the low-high control valve 60 and the drain port Ex is opened as described above, hence putting the hydraulic chamber of the high clutch C_{H} in a released state. In addition, the second hydraulic chamber 47 of the primary-side hydraulic servo 32 has a hydraulic path opened to a drain port Ex of the down-shift relief valve 58 by way of ports (m) and (l) of the low-high control valve (the low-high switching valve or low-high switching means) 60, the ports (f) and (e) of the manual valve 59 and a port (s) of the down-shift relief valve 58.

As a result, the low clutch C_{L} is engaged and, at the same time, in the CVT 11, an axial force generated by the secondary-side hydraulic servo 33 in which hydraulic pressures are applied to both the first and second hydraulic chambers 46 and 49 exceeds an axial force generated by the primary-side hydraulic servo 32 in which a hydraulic pressure is applied to only the first hydraulic chamber 45. The axial force generated by the secondary-side hydraulic servo 33 is further increased gradually to raise the pulley ratio. At that time, the movable sheave 7b of the primary pulley 7 is moved to the U/D side. In this state, an engine torque transmitted from the first shaft 3 to the carrier 19c of the planetary gear 19 by way of the low clutch C_{L} and the power transmitting apparatus 26 is output to the second shaft 5 by way of the ring gear 19r while the engine torque is being controlled in the CVT 11 by a predetermined pulley ratio through the sun gear 19s.

When an up shift is continued, the pulley ratio is gradually increased. Before the pulley ratio reaches the second pulley ratio B shown in Fig. 4, however, the operation of the low-high control valve 60 driven by the on/off operations of the solenoid valve is inhibited. That is to say, in an up shift, the movable sheave 7b of the primary pulley 7 is moved to the U/D side and the sensor shoe 65 associated with the movable sheave 7b is moved in the downward direction in the figure. Before the pulley ratio reaches the second pulley ratio B, however, the base end 66a of the interlock rod 66 is brought into contact with the surface of the sensor shoe 65 without being engaged with the dent 65a. As a result, the other end 66b of the interlock rod 66 on the opposite side to the base end 66a is engaged with the dent 60a of the low-high control valve 60, mechanically locking the low-high control valve 60 in a state sustaining the low mode. In this state, operations are inhibited.

As the up shift brings the pulley ratio to the second pulley ratio B, the base end 66a of the interlock rod 66 is engaged with the dent 65a of the sensor shoe 65. The other end 66b on the opposite side is moved to the right in the figure, freeing the engagement thereof with the dent 60a of the interlock rod 66. As a result, at a pulley ratio above the second pulley ratio B, the operation of the low-high control valve 60 is enabled. It should be noted that, also in the high mode of the drive range, at a pulley ratio below the second pulley ratio B, the low-high control valve 60 is locked mechanically as will be described later.

A down shift in the low mode of the drive range in the region below the second pulley ratio B is inhibited but enabled in the region above the second pulley ratio B. To put it in detail, in the former region, the ratio sensing valve 63 which moves in an associated manner with the movable sheave 7b of the primary pulley 7 by way of the sensor shoe 65 is in a state shown in the figure. In this state, the hydraulic pressure from the port (v) of the primary regulator valve 56 is halted by the ratio sensing valve 63, making it impossible to supply a hydraulic pressure necessary for a down shift to the second hydraulic chamber 47. It should be noted that, also in this state, a hydraulic path between a port (q) of the ratio control valve 57 and the drain port Ex thereof is opened, allowing the hydraulic pressure of the second hydraulic chamber 49 to be drained to the port Ex by way of the ports (k) and (j) of the low-high control valve 60, the ports (d) and (c) of the manual valve 59 and the port (q) of the ratio control valve 57. As a result, a down shift till Pri = Sec shown in Fig. 9 is possible.

In the region above the second pulley ratio B, on the other hand, a down shift is possible by virtue of, among other components, the ratio sensing valve 63. That is to say, in the region above the second pulley ratio B, the movable pulley 7b of the primary pulley 7 is moved to the U/D side, driving the ratio sensing valve 63 in the downward direction of the figure by way of the sensor shoe 65. As a result, since the hydraulic path between ports (t) and (u) of the ratio sensing valve 63 is opened, the hydraulic pressure from the primary regulator valve 56 is led to the down-shift relief valve 58 by way of a check valve 69. The hydraulic pressure moves the down-shift relief valve 58 in the upward direction of the figure, opening a hydraulic path between a port (r) and the port (s) thereof. In this state, it becomes possible to supply a hydraulic pressure to the second hydraulic chamber 47 by way of the ports (e) and (f) of the manual valve 59 and the ports (l) and (m) of the low-high control valve 60. In other words, a down shift can be carried out.

It should be noted that, by properly setting the second pulley ratio B, in a region where a down shift is required, it is possible to make a down shift works effectively. For example, if the second pulley ratio B is set at a location in close proximity to the first pulley ratio A which corresponds to the neutral state, with a change gear ratio of the continuously variable transmission as a whole set at about the same value as the first gear ratio (the first speed) of the ordinary automatic transmission (A/T), the pulley ratio is fixed at the second pulley ratio B, allowing an effective engine brake to function.

### (2) H mode of drive (D) range

Equal hydraulic pressures are supplied to the first hydraulic chambers 45 and 46 respectively. The high clutch C_{H} is engaged and, in an up shift, a hydraulic pressure is further supplied to the second hydraulic chamber 49. In addition, in a down shift, a hydraulic pressure is supplied to the second hydraulic chamber 47. In the region below the second pulley ratio B, the operation of the low-high control valve 60 is mechanically inhibited.

That is to say, in the high mode of the drive (D) range, the manual valve 59 is placed at the D range position as shown in Fig. 7 as is the case with the low mode explained previously. However, the low-high control valve 60 is switched to the H mode position, opening hydraulic paths between the ports (h) and (g), the ports (j) and (m) and the ports (l) and (k) as well as a hydraulic path between the port (i) and the drain port Ex.

In this state, the hydraulic pressure from the output port (v) of the primary regulator valve 56 is supplied to the hydraulic servo of the high clutch C_{H} by way of the ports (a) and (b) of the manual valve 59 and the ports (h) and (g) of the low-high control valve 60, putting the high clutch C_{H} in an engaged state. In addition, the hydraulic pressure from the output port (v) of the primary regulator valve 56 is also supplied to the second hydraulic chamber 47 of the primary-side hydraulic servo 32 by way of the ports (p) and (q) of the ratio control valve 57, the ports (c) and (d) of the manual valve 59 and the ports (j) and (m) of the low-high control valve 60. It should be noted that, in this state, a hydraulic path between the port (i) of the low-high control valve 60 and the drain port Ex thereof is opened, hence putting the hydraulic chamber for and the low clutch C_{L} in a released state. In addition, the second hydraulic chamber 49 of the secondary-side hydraulic servo 33 has a hydraulic path opened to a drain port Ex of the down-shift relief valve 58 by way of the ports (k) and (l) of the low-high control valve (the low-high switching valve or low-high switching means) 60, the ports (f) and (e) of the manual valve 59 and a port (s) of the down-shift relief valve 58.

As a result, the high clutch C_{H} is engaged and, at the same time, in the CVT 11, an axial force generated by the primary-side hydraulic servo 32 in which hydraulic pressures are applied to both the first and second hydraulic chambers 45 and 47 exceeds an axial force generated by the secondary-side hydraulic servo 33 in which a hydraulic pressure is applied to only the first hydraulic chamber 46 works, putting the CVT 11 in an axial force state for torque transmission from the primary pulley 7 to the secondary pulley 9. In this sate, by properly regulating the ratio control valve 57, the hydraulic pressure in the second hydraulic chamber 47 of the primary-side hydraulic servo 32 can be regulated. As a result, the axial force produced by the primary-side hydraulic servo 32 is also regulated to give an appropriate pulley ratio (that is, an appropriate torque ratio). In this state, a torque transmitted from the engine to the first shaft 3 is properly changed by the CVT 11 in which transmission from the primary pulley 7 to the secondary pulley 9 is under way and further output to the second shaft 5 by way of the high clutch C_{H}.

In the high mode of the drive (D) range described above, as the pulley ratio goes below the second pulley ratio B, the operation of the low-high control valve 60 is mechanically inhibited. This is because, at a pulley ratio equal to or greater than the second pulley ratio B, the movable sheave 7b of the primary pulley 7 is placed on the U/D side shown in the figure and the base end 66a of the interlock rod 66 is engaged with the dent 65a of the sensor shoe 65 while, on the other hand, the other end 66b thereof on the opposite side is out of the dent 60b of the low-high control valve 60 and moves to the right in the figure, enabling the operation of the low-high control valve 60. At a pulley ratio equal to or smaller than the second pulley ratio B, on the contrary, the movable sheave 7b of the primary pulley 7 is placed on the O/D side shown in the figure and the base end 66a of the interlock rod 66 is brought into contact with the surface of the sensor shoe 65 while, on the other hand, the other end 66b thereof on the opposite side is engaged with the dent 60b of the low-high control valve 60. As a result, the low-high control valve 60 is mechanically locked in a state in which the high mode is sustained, inhibiting the operation thereof.

That is to say, at a pulley ratio equal to or smaller than the second pulley ratio B, the operation of the low-high control valve 60 is mechanically inhibited, be it in the low mode of the drive range or the high mode of the drive range, sustaining the low or high mode as it is. As a result, at a high rotational speed of the second shaft 5, even if a signal is by any chance output to the solenoid valve to carry out a switching operation from the high mode of the drive range to the low mode of the drive range in the event of an electrical failure, the low-high control valve 60 will not operate, which effectively prevents an over revolution of an engine and a backward drive.

In addition, in the high mode of the drive range, even at a pulley ratio equal to or smaller than the second pulley ratio B, a down shift is never inhibited unlike the low mode of the drive range. That is to say, in the high mode of the drive range, in the region below the second pulley ratio B, the hydraulic pressure from the output port (v) of the primary regulator valve 56 is halted by the ratio sensing valve 63 which is put in a state shown in Fig. 7. Thus, the hydraulic pressure is never supplied to the second hydraulic chamber 49 by way of the down-shift relief valve 58, the manual valve 59 and the low-high control valve 60. In place of the hydraulic pressure from the output port (v) of the primary regulator valve 56, however, a hydraulic pressure from the high clutch C_{H} is supplied to the second hydraulic chamber 49 by way of the check valve 69, the ports (r) and (s) of the down-shift relief valve 58, the ports (e) and (f) of the manual valve 59 and the ports (l) and (k) of the low-high control valve 60. As a result, in the high mode of the drive (D) range, a down shift is possible over the entire range of the pulley ratio.

### (3) Reverse (R) range

In the reverse range, a predetermined hydraulic pressure is supplied to the first and second hydraulic chambers 45 and 47 of the primary-side hydraulic servo 32, the first hydraulic chamber 46 of the secondary-side hydraulic servo 33 and the hydraulic servo of the low clutch C_{L} as shown in Fig. 7. That is to say, in the reverse range, the manual valve 59 is placed at an R range position and the low-high control valve 60 is at an L mode position as shown in the figure. In this state, hydraulic paths between the ports (a) and (b), the ports (c) and (f) as well as the ports (e) and (d) of the manual valve 59 are opened. In addition, much like the low mode described earlier, hydraulic paths between the ports (h) and (i), the ports (j) and (k), the ports (l) and (m) as well as the port (g) and the drain port Ex of the low-high control valve 60 are opened.

As a result, the hydraulic pressure from the output port (v) of the primary regulator valve 56 is supplied to the hydraulic servo of the low clutch C_{L} by way of the ports (a) and (b) of the manual valve 59 and the ports (h) and (i) of the low-high control valve 60. The hydraulic pressure from the output port (v) of the primary regulator valve 56 is also supplied to the second hydraulic chamber 47 of the primary-side hydraulic servo 32 by way of the ports (p) and (q) of the ratio control valve 57, the ports (c) and (f) of the manual valve 59 and the ports (l) and (m) of the low-high control valve 60. In addition, a hydraulic path between the port (s) and the drain port Ex of the down-shift relief valve 58 is opened.

As a result, the low clutch C_{L} is engaged and, at the same time, in the CVT 11, an axial force generated by the primary-side hydraulic servo 32 in which hydraulic pressures are applied to both the first and second hydraulic chambers 45 and 47 exceeds an axial force generated by the secondary-side hydraulic servo 33 in which a hydraulic pressure is applied to only the first hydraulic chamber 46 works, putting the CVT 11 in an axial force state for torque transmission from the primary pulley 7 to the secondary pulley 9. In this state, by properly regulating the ratio control valve 57, the hydraulic pressure in the second hydraulic chamber 47 of the primary-side hydraulic servo 32 is regulated. As a result, the axial force produced by the primary-side hydraulic servo 32 is also regulated to give an appropriate pulley ratio. In this state, the pulley ratio of the CVT 11 has a predetermined O/D value and an engine torque from the first shaft 3 is transmitted to the carrier 19c of the planetary gear 19 by way of the low clutch C_{L} and the power transmitting apparatus 26. At the same time, an engine torque is also transmitted to the sun gear 19s by way of the CVT 11 in which torque transmission from the primary pulley 7 to the secondary pulley 9 is under way. Both the torques are combined in the planetary gear 19 and output to the second shaft 5 as a rotation in the reverse direction by way of the ring gear 19r.

Also in the reverse range, the supply of a hydraulic pressure to the down-shift relief valve 58 is inhibited by the sensor shoe 65 and the ratio sensing valve 63 as in the case of a pulley ratio equal to or smaller than the second pulley ratio B in the low mode of the drive range. As a result, a down shift is also inhibited as well. It should be noted that, in the reverse range, basically, the engine brake is not required in particular. Thus, no problem arises whatsoever even if the down shift is inhibited.

### (4) Neutral (N) and parking (P) ranges

When the manual valve 59 is placed at a P range or N range position, both the low and high clutches C_{L} and C_{H} are disengaged and a predetermined hydraulic pressure is supplied to the first hydraulic chambers 45 and 46 of the primary-side and secondary-side hydraulic servos 32 and 33 respectively. This is because, in these ranges, hydraulic paths between the ports (c) and (d), the ports (e) and (f) as well as the port b and the drain port Ex of the manual valve 59 are opened. In addition, the low-high control valve 60 is sustained in the low mode of the drive range described earlier. On the top of that, a hydraulic path between the port (q) and the drain port Ex of the ratio control valve 57 is opened and the ratio sensing valve 63 is held at a position shown in Fig. 7.

As a result, a hydraulic pressure from the output port (v) of the primary regulator valve 56 is supplied only to the first hydraulic chamber 45 of the primary-side hydraulic servo 32 and the first hydraulic chamber 46 of the secondary-side hydraulic servo 33 and is not to either of the valves. Thus, equal hydraulic pressures are supplied only to the first hydraulic chambers 45 and 46 of the primary-side and secondary-side hydraulic servos 32 and 33 respectively, resulting in about equal axial forces working on both the primary and secondary pulleys 7 and 9.

It should be noted that, at the D, N and R positions and in the low and high modes, a predetermined hydraulic pressure from the primary regulator valve 56 is supplied to the first hydraulic chambers 45 and 46 of the primary-side and secondary-side hydraulic servos 32 and 33 respectively, securing a predetermined axial force corresponding to a transmitted torque so as to prevent the belt from slipping. In addition, a regulated hydraulic pressure from the ratio control valve 57 is applied to either the second hydraulic chamber 47 of the primary-side hydraulic servo 32 or the second hydraulic chamber 49 of the secondary-side hydraulic servo 33 in order to adjust the ratio of the axial force of the primary pulley 7 to the axial force of the secondary pulley 9 in a transmission operation so as to produce a predetermined pulley ratio.

In the embodiment described above, the second pulley ratio B is used as a threshold pulley ratio for inhibiting a down shift in the low mode of the drive range as well as a threshold pulley ratio for mechanically inhibiting the operation of the low-high control valve 60 in the low and high modes of the drive range. It should be noted, however, that the threshold pulley ratios can also be set at values different from each other. For example, the threshold pulley ratio for inhibiting a down shift in the low mode of the drive range can be set at a value closer to the first pulley ratio A while the threshold pulley ratio for mechanically inhibiting the operation of the low-high control valve 60 in the low and high modes of the drive range can be set at a value farther from the first pulley ratio A. At any rate, it is desirable to set the threshold pulley ratio for inhibiting a down shift in the low mode of the drive range and the threshold pulley ratio for mechanically inhibiting the operation of the low-high control valve 60 in the low and high modes of the drive (D) range at values determined by actual running conditions of the vehicle.

In the embodiment described above, the sensor shoe 65 which moves in an associated manner with the movable sheave 7b of the primary pulley 7 is used as a detecting means for detecting the pulley ratio. It should be noted, however, that a sensor shoe which moves in an associated manner with the movable sheave 9b of the secondary pulley 9 can also be used as a detecting means for detecting the pulley ratio in place of the sensor shoe 65.

According to the continuously variable transmission, in the predetermined pulley-ratio range, the operation to switch from the low mode to the high mode and vice versa is inhibited, effectively allowing a reversal from a forward dive to a backward drive, over revolution of an engine and the like to be avoided.

In addition, according to the continuously variable transmission, by controlling the operation of the low-high switching valve, the operations of the hydraulic servos for engaging the two clutches can be controlled, preventing the engagement of the clutches to be switched from one to another and, thus, inhibiting an operation to switch from a low mode to a high mode and vice versa. In this way, the object of the invention can be achieved by taking a simple countermeasure, that is, by merely controlling the operation of the low-high switching valve.

According to the continuously variable transmission, by mechanically locking the spool of the low-high switching valve by means of the lock member, an operation to switch from a low mode to a high mode and vice versa can be inhibited, resulting in a reliable operation.

According to the continuously variable transmission, the position detecting member associated with the movement of the movable pulley which moves in accordance with a change in pulley ratio and the lock member directly actuated by the position detecting member are used for locking and unlocking the spool, resulting in an even more reliable operation.

In addition, according to the continuously variable transmission, the operation to switch from the low mode to the high mode or vice versa as well as the forward drive, neutral and backward drive states can be implemented with ease by changing the engagement from the first clutch to the second clutch or vice versa and varying the pulley ratio.

## Claims

1. A continuously variable transmission comprising:
an input shaft (3) associated with an engine output shaft (2);
an output shaft (5) associated with vehicle wheels;
a belt-type continuously variable transmission apparatus (11) comprising a first pulley (7) associated with said input shaft (3), a second pulley (9) on the side of said output shaft (5) and a belt (10) wound around said first and second pulleys (7,9);
a planetary gear (19) interposed between said input and output shafts (3,5) wherein a transmission path between said input and output shafts (3,5) is changed so that any pulley ratio in a pulley-ratio range of said belt-type continuously variable transmission apparatus (11) can correspond to a low mode with a high torque ratio and a high mode with a low torque ratio;
low-high switching means (60) for switching operation between said low and high modes;
detecting means (65) for detecting said pulley ratio of said belt-type continuously variable transmission apparatus (11);
inhibition means (66) for inhibiting switching operation between said low and high modes by preventing said low-high switching means (60) from operating if a pulley ratio detected by said detecting means (65) is within a predetermined pulley-ratio range,
a first clutch (C_{L}) having a first hydraulic servo and engaged to set said low mode when a hydraulic pressure is applied to said first hydraulic servo;
a second clutch (C_{H}) having a second hydraulic servo and engaged to set said high mode when a hydraulic pressure is applied to said second hydraulic servo,
wherein said low-high switching means (60) has a low-high switching valve (60) for switching operation to selectively supply said hydraulic pressure to either of said first and second hydraulic servos; and **characterised in that**
said low-high switching valve (60) has a spool (60c) for switching a supply path of said hydraulic pressure to selectively supply said hydraulic pressure to either of said first and second hydraulic servos in accordance with an output signal from said detecting means (65); and
said inhibition means (66) has a lock member for locking said spool if said pulley ratio is within a predetermined pulley-ratio range.

2. A continuously variable transmission according to Claim 1,
wherein said first and second pulleys (7,9) are respectively provided with movable sheaves (7b,9b) for changing a narrowing pressure of said belt (10) to change said pulley ratio;
said detecting means (65) has a position detecting member which has a protrusion/dent portion (65a) formed thereon for engaging and disengaging one end (66a) of said lock member (66) and is movable in an associated manner with either of said movable sheaves (7b,9b); and
the other end (66b) of said lock member (66) locks and unlocks said spool (60c) by engaging and disengaging said one end (66a) of said lock member (66) with and from said protrusion/dent portion (65a) respectively.

3. A continuously variable transmission according to Claims 2,
wherein said planetary gear (19) comprises a first rotary element (19c) connected to said input shaft (3), a second rotary element (19s) connected to said second pulley (9) and a third rotary element (19r) connected to said output shaft (5);
said input shaft (3) and said first rotary element (19c) are connected to each other by said first clutch (C_{L}); and
two of said first, second and third rotary elements (19c,19s,19r) are connected to each other by said second clutch (C_{H}).

## Patentansprüche

1. Stufenlos regelbares Getriebe mit:
einer mit einer Motorausgangswelle (2) verbundenen Antriebswelle (3);
einer mit Fahrzeugrädern verbundenen Abtriebswelle (5) ;
einer CVT-Vorrichtung (11) mit Riemenantrieb mit einer mit der Antriebswelle (3) verbundenen ersten Riemenscheibe (7), einer zweiten Riemenscheibe (9) auf der Seite der Abtriebswelle (5) und einem um die erste und die zweite Riemenscheibe (7, 9) geführten Riemen (10);
einem zwischen der Antriebs- und der Abtriebswelle (3, 5) angeordneten Planetengetriebe (19), wobei ein Kraftübertragungsweg zwischen der Antriebs- und der Abtriebswelle (3, 5) so verändert wird, daß ein beliebiges Scheibenübersetzungsverhältnis in einem Scheibenübersetzungsverhältnisbereich der CVT-Vorrichtung (11) mit Riemenantrieb einem Low-Modus mit einem hohen Drehmomentverhältnis und einem High-Modus mit einem niedrigen Drehmomentverhältnis entsprechen kann;
einer Low-High-Schalteinrichtung (60) für einen Schaltvorgang zwischen dem Low- und dem High-Modus;
einer Erfassüngseinrichtung (65) zum Erfassen des Scheibenübersetzungsverhältnisses der CVT-Vorrichtung (11) mit Riemenantrieb;
einer Blockiereinrichtung (66) zum Blockieren des Schaltvorgangs zwischen dem Low- und dem High-Modus, indem verhindert wird, daß die Low-High-Schalteinrichtung (60) betätigt wird, wenn ein durch die Erfassungseinrichtung (65) erfaßtes Scheibenübersetzungsverhältnis innerhalb eines vorgegebenen Scheibenübersetzungsverhältnisbereichs liegt;
einer ersten Kupplung (C_{L}) mit einer ersten Hydraulik-Servoeinrichtung, die eingerückt wird, um den Low-Modus einzustellen, wenn der ersten Hydraulik-Servoeinrichtung ein Hydraulikdruck zugeführt wird; und
einer zweiten Kupplung (C_{H}) mit einer zweiten Hydraulik-Servoeinrichtung, die eingerückt wird, um den High-Modus einzustellen, wenn der zweiten Hydraulik-Servoeinrichtung ein Hydraulikdruck zugeführt wird;
wobei die Low-High-Schalteinrichtung (60) ein Low-High-Schaltventil (60) zum Ausführen eines Schaltvorgangs zum selektiven Zuführen des Hydraulikdrucks zur ersten oder zur zweiten Hydraulik-Servoeinrichtung aufweist;
**dadurch gekennzeichnet, daß**
das Low-High-Schaltventil (60) einen Ventilschieber (60c) zum Schalten eines Zufuhrweges des Hydraulikdrucks zum selektiven Zuführen des Hydraulikdrucks zur ersten oder zur zweiten Hydraulik-Servoeinrichtung gemäß einem Ausgangssignal von der Erfassungseinrichtung (65) aufweist; und
die Blockiereinrichtung (66) ein Blockierelement zum Blockieren des Ventilschiebers aufweist, wenn das Scheibenübersetzungsverhältnis innerhalb eines vorgegebenen Scheibenübersetzungsverhältnisbereichs liegt.

2. Stufenlos regelbares Getriebe nach Anspruch 1,
wobei die erste und die zweite Riemenscheibe (7, 9) jeweils eine bewegliche Scheibe (7b, 9b) zum Ändern eines auf das Band (10) ausgeübten Kontraktions- oder Verengungsdrucks zum Ändern des Scheibenübersetzungsverhältnisses aufweisen;
die Erfassungseinrichtung (65) ein Positionserfassungselement mit einem darauf ausgebildeten Vorsprung/Vertiefungsabschnitt (65a) aufweist, der mit (von) einem Ende (66a) des Blockierelements (66) in (außer) Eingriff kommt, und das einer der beweglichen Scheiben (7b, 9b) zugeordnet und mit ihr beweglich ist; und
das andere Ende (65b) des Blockierelements (66) den Ventilschieber (60c) blockiert oder entsperrt, indem das eine Ende (66a) des Blockierelements (66) mit (von) dem Vorsprung-/Vertiefungsabschnitt (65a) in (außer) Eingriff kommt.

3. Stufenlos regelbares Getriebe nach Anspruch 2,
wobei das Planetengetriebe (19) ein mit der Antriebswelle (3) verbundenes erstes Drehelement (19c), ein mit der zweiten Riemenscheibe (9) verbundenes zweites Drehelement (19s) und ein mit der Abtriebswelle (5) verbundenes drittes Drehelement (19r) aufweist;
wobei die Antriebswelle (3) und das erste Drehelement (19c) durch die erste Kupplung (C_{L}) miteinander verbunden werden; und
von dem ersten, zweiten und dritten Drehelement (19c, 19s, 19r) zwei Drehelemente durch die zweite Kupplung (C_{H}) miteinander verbunden werden.

## Revendications

1. Transmission variable en continu, comprenant :
- un arbre d'entrée (3) associé à l'arbre de sortie d'un moteur (2) ;
- un arbre de sortie (5) associé aux roues d'un véhicule ;
- un dispositif de transmission variable en continu du type à courroie (11) comprenant une première poulie (7) associée audit arbre d'entrée (3), une seconde poulie (9) du coté dudit arbre de sortie (5) et une courroie (10) enroulée autour desdites première et seconde poulies (7, 9) ;
- un engrenage planétaire (19) interposé entre lesdits arbres d'entrée et de sortie (3, 5) dans lequel un trajet de transmission entre lesdits arbres d'entrée et de sortie (3, 5) est modifié de telle façon qu'un quelconque rapport de poulie dans un intervalle de rapports de poulie dudit dispositif de transmission variable en continu du type à courroie (11) peut correspondre à un mode bas avec un haut rapport de couple et un mode haut avec un faible rapport de couple ;
- un moyen de commutation bas/haut (60) pour commuter un fonctionnement entre lesdits modes bas et haut ;
- un moyen de détection (65) pour détecter ledit rapport de poulie dudit dispositif de transmission variable en continu du type à courroie (11) ;
- un moyen d'inhibition (66) pour inhiber une opération de commutation entre lesdits modes bas et haut en empêchant ledit moyen de commutation bas/haut (60) de fonctionner si un rapport de poulie détecté par ledit moyen de détection (65) se trouve dans un intervalle prédéterminé de rapports de poulie ;
un premier embrayage (C_{L}) possédant un premier servomoteur hydraulique et engagé pour établir ledit mode bas lorsqu'une pression hydraulique est appliquée audit premier servomoteur hydraulique ;
un second embrayage (C_{H}) possédant un second servomoteur hydraulique et engagé pour établir ledit mode haut lorsqu'une pression hydraulique est appliquée audit second servomoteur hydraulique,
dans lequel ledit moyen de commutation bas/haut (60) possède une soupape de commutation bas/haut (60) pour commuter le fonctionnement afin de fournir de façon sélective ladite pression hydraulique à un quelconque desdits premier et second servomoteurs hydrauliques ; et
**caractérisée en ce que** :
- ladite soupape de commutation bas/haut (60) possède un tiroir (60c) pour commuter un trajet d'alimentation de ladite pression hydraulique pour fournir, de façon sélective, ladite pression hydraulique vers un quelconque desdits premier et second servomoteurs hydrauliques selon un signal de sortie dudit moyen de détection (65) ; et
- ledit moyen d'inhibition (66) possède une pièce de blocage pour bloquer ledit tiroir si ledit rapport de poulie se trouve dans un intervalle prédéterminé de rapports de poulie.

2. Transmission variable en continu selon la revendication 1, dans laquelle :
- lesdites première et seconde poulies (7, 9) sont respectivement munies de flasques mobiles (7b, 9b) pour modifier une pression de rétrécissement de ladite courroie (10) afin de modifier ledit rapport de poulie ;
- ledit moyen de détection (65) possède une pièce de détection de position munie d'une partie de protubérance/creux (65a) formée dessus pour engager et libérer une extrémité (66a) de ladite pièce de blocage (66) et est mobile, de façon associée, avec l'un quelconque desdits flasques mobiles (7b, 9b) ; et
- l'autre extrémité (66b) de ladite pièce de blocage (66) bloque et débloque respectivement ledit tiroir (60c) par engagement et libération de ladite extrémité (66a) de ladite pièce de blocage (66) avec et à partir de ladite partie de protubérance/creux (65a).

3. Transmission variable en continu selon la revendication 2, dans laquelle :
- ledit engrenage planétaire (19) comprend un premier élément rotatif (19c) raccordé audit arbre d'entrée (3), un second élément rotatif (19s) raccordé à ladite seconde poulie (9) et un troisième élément rotatif (19r) raccordé audit arbre de sortie (5) ;
- ledit arbre d'entrée (3) et ledit premier élément rotatif (19c) sont raccordés l'un à l'autre par ledit premier embrayage (C_{L}) ; et
- deux desdits premier, second et troisième éléments rotatifs (19c, 19s, 19r) sont raccordés l'un à l'autre par ledit second embrayage (C_{H}).
